# EUROPEAN PATENT SPECIFICATION

(11) **EP 3 744 906 B1**
(45) Date of publication and mention of the grant of the patent: **07.05.2025**
(21) Application number: 19770368.9
(22) Date of filing: 18.03.2019
(51) Int. Cl.: E02F 9/20, B60R 16/02, G05G 1/04, G05G 5/03, E02F 9/26

(54) **CONSTRUCTION MACHINE**
BAUMASCHINE
ENGIN DE CHANTIER

(30) Priority: 19.03.2018 JP 2018051028
(43) Date of publication of application: 02.12.2020
(73) Proprietor: KOBELCO CONSTRUCTION MACHINERY CO., LTD., Hiroshima-shi, Hiroshima 731-5161 (JP)
(72) Inventor: TANAKA, Kiyokazu, Minato-ku, Tokyo 105-0001 (JP); TAKAMURA, Reona, Minato-ku, Tokyo 105-0001 (JP)
(74) Representative: TBK
(86) International application number: PCT/JP2019/011027
(87) International publication number: WO 2019/181814

(56) References cited:
- EP-A1- 2 444 919
- EP-A1- 2 578 757
- EP-B1- 2 444 919
- EP-B1- 2 578 757
- JP-A- 2003 184 131
- JP-A- 2005 105 582
- JP-A- 2016 095 813
- JP-A- H05 223 933
- KR-A- 20100 073 477
- SE-C2- 540 069
- US-A1- 2016 176 338
- US-A1- 2018 074 178

## Description

### Technical Field

The present invention relates to a construction machine such as a hydraulic excavator.

### Background Art

A work of a construction machine such as a hydraulic excavator is performed when an operator in an operation room operates an operation lever or the like. In a case where an obstacle is present around a construction machine during the above-mentioned work, for example, when alarm information which notifies the operator of the presence of the obstacle is given to the operator, the operator's attention is called, so that the operability of the construction machine is improved. Accordingly, such an alarm system is preferable for enhancing operability of the construction machine.

As a method of transmitting the alarm information to the operator, a method where the alarm information is transmitted to the operator by sounds, images, vibration or the like can be exemplified. For example, Patent Literature 1 discloses a control system for a construction machine where alarm information which indicates the presence of an obstacle around the construction machine is transmitted to an operator in an operation room by making use of vibration.

The control system of Patent Document 1 includes: a construction machine which performs a work, and an operation room in which an operator performs a remote control of the construction machine. A distance measuring device is provided on an attachment of the construction machine, and an operating device which an operator operates is disposed in the operation room. When the attachment is positioned within a predetermined distance from a target position, the attachment is detected by the distance measuring device, and alarm information that the attachment is positioned within the predetermined distance from the target position (the attachment is in contact with an object existing at the target position) is transmitted to the operation room from the construction machine via a communication device.

The operating device is provided with a tactile sense giving portion, and the tactile sense giving portion vibrates in response to the alarm information. The attention of the operator is called by receiving vibration from the tactile sense giving portion.

By the way, during a work of the construction machine, a state of the construction machine and a situation around the construction machine change variously. However, the control system of Patent Literature 1 cannot sufficiently notify the operator of such changes in various situations of the construction machine. In view of the above, it is desirable to more appropriately notify the operator of changes in various situations of the construction machine.
Further background is disclosed in US 2016/176338 A1 "Obstacle Detection System", EP 2578757 A1 "Work Machine Comprising a Safety Device" and SE 540069 C2 "Robotic Vehicle Having Power Cord Awareness".

### Citation List

### Patent Literature

Patent Literature 1: JP 2010-248703A

### Summary of Invention

It is an object of the present invention to provide a construction machine which can appropriately notify an operator of changes in various situations of a construction machine.

Provided is a construction machine which includes: a lower travelling body; an upper slewing body mounted on the lower travelling body so as to be slewable; a working device rotatably connected to the upper slewing body; an attachment connected to a distal end of the working device; an operation part which receives an operation by an operator for operating at least one of the lower travelling body, the upper slewing body, the working device, and the attachment; a vibration applying device which applies a vibration to a target portion that is at least a part of a portion of the construction machine which is brought into contact with a body of the operator who operates the operation part; a control device which controls an operation of the vibration applying device; and an index acquisition part which acquires an index value indicating a situation of the construction machine. The vibration applying device is configured to perform a first vibration applying operation for applying a vibration having a first vibration pattern to the target portion, and a second vibration applying operation for applying a vibration having a second vibration pattern which differs from the first vibration pattern to the target portion. The control device is configured to cause the vibration applying device to perform the first vibration applying operation when the index value acquired by the index acquisition part satisfies a predetermined first condition corresponding to a first situation of the construction machine, and to cause the vibration applying device to perform the second vibration applying operation when the index value acquired by the index acquisition part is a predetermined second condition corresponding to a second situation of the construction machine which differs from the first condition. The index value includes an external environment index value which changes corresponding to a relative position between the construction machine and at least one peripheral object existing around the construction machine. The at least one peripheral object is a target object existing at a target position set as a destination to which a specific portion of the construction machine moves. The external environment index value includes a target distance from the specific portion of the construction machine to the target position. The first condition includes a condition that the target distance is within a predetermined first distance range. The second condition includes a condition that the target distance is within a predetermined second distance range which differs from the first distance range, the second distance range being a range closer to the target position than the first distance range. The specific portion is a distal end portion of the attachment.

### Brief Description of Drawings

FIG. 1 is a plan view showing a construction machine according to an embodiment of the present invention.
FIG. 2 is a side view showing the construction machine according to the embodiment.
FIG. 3 is a perspective view showing an operation room of the construction machine according to the embodiment.
FIG. 4 is a front view showing an operation lever on which a detachable vibration applying device is mounted in the construction machine according to the embodiment.
FIG. 5 is a block diagram showing a configuration of the construction machine according to the embodiment.
FIG. 6 is a flowchart showing the concept of the present invention.
FIG. 7 is a flowchart showing an example of a control in a case where a distance between a distal end portion of the attachment and a target position is used as an index value in the construction machine according to the embodiment.
FIG. 8 is a view for explaining an operation of the construction machine in a case where the index value is a distance between the distal end portion of the attachment and the target position in the construction machine according to the embodiment.
FIG. 9 is a view for explaining an operation of the construction machine when the distal end portion of the attachment approaches the target position in the construction machine according to the embodiment.
FIG. 10 is a flowchart showing an example of a control in a case where an abnormality degree of is used as an index value.

### Description of Embodiments

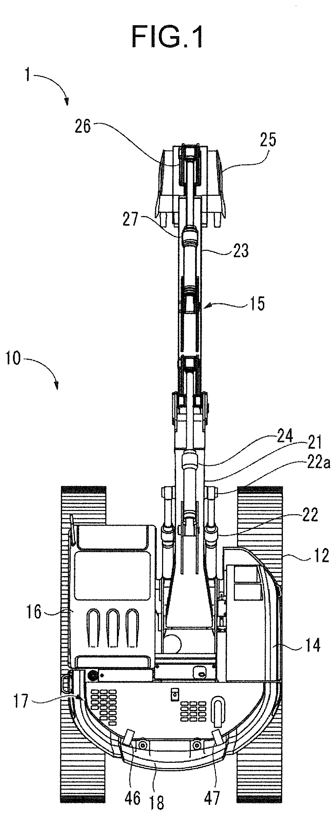

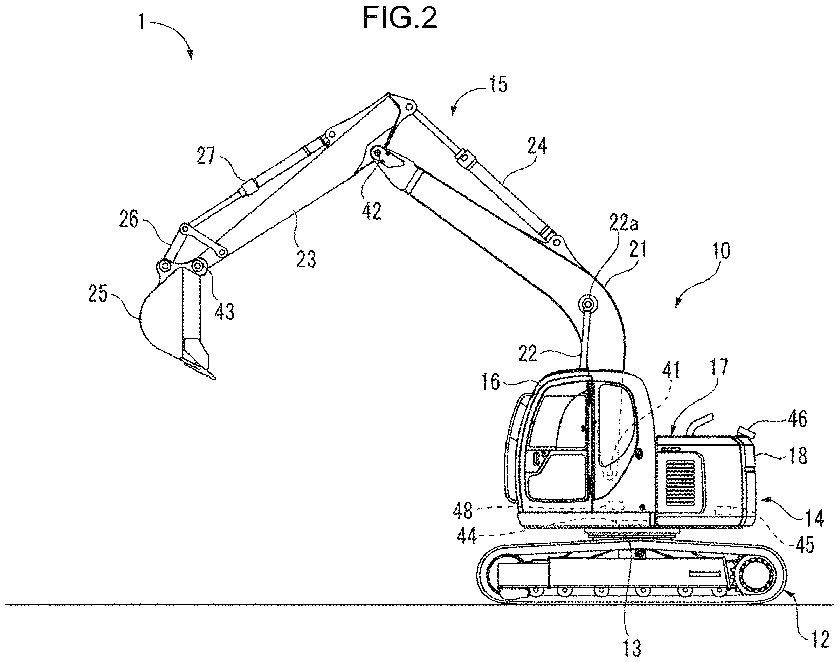

A construction machine 10 according to an embodiment of the present invention is described in detail with reference to drawings. As shown in FIGS. 1 and 2, the construction machine 10 is a hydraulic excavator. The construction machine 10 includes a lower travelling body 12, an upper slewing body 14 mounted on the lower travelling body 12 so as to be slewable by way of a slewing shaft 13, a working device 15 mounted on the upper slewing body 14, and an attachment 25. In the present embodiment, the working device 15 includes a boom 21 and an arm 23. In the present embodiment, the attachment 25 is a bucket. However, the attachment 25 is not limited to the bucket, and may be a grapple, a hydraulic crusher (crusher), a breaker, a fork or the like, for example.

The upper slewing body 14 has a slewing frame connected to the lower travelling body 12, an operation room (cab) 16 mounted on the slewing frame, and a machine room 17 mounted on the slewing frame. The operation room 16 is arranged at a front portion of the slewing frame which is displaced on one side in a lateral direction. The machine room 17 is arranged at a rear portion of the slewing frame. In the machine room 17, an engine and a counterweight 18 are disposed.

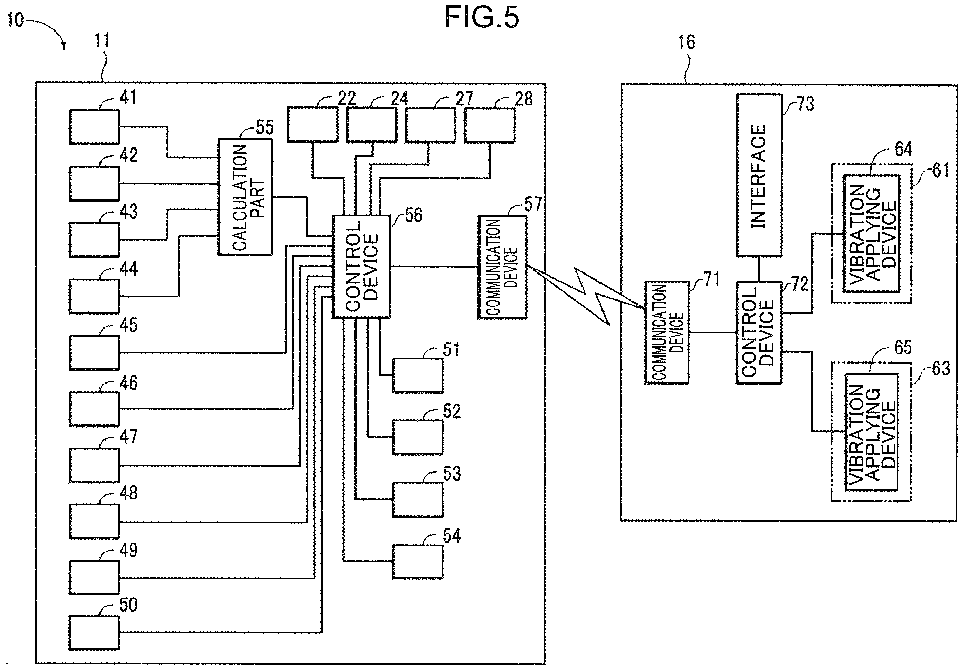

The construction machine 10 further includes a plurality of actuators for moving the lower travelling body 12, the upper slewing body 14, the working device 15, and the bucket 25. The plurality of actuators include a boom cylinder 22, an arm cylinder 24, a bucket cylinder 27, a slewing motor 28 (see FIG. 5), and a travelling drive device not shown in the drawing.

The boom cylinder 22 is an actuator for rotating the boom 21 with respect to the upper slewing body 14. A proximal end portion of the boom cylinder 22 is rotatably supported with respect to the upper slewing body 14. A distal end portion of the boom cylinder 22 is rotatably connected to the boom 21 by way of a pin 22a. The arm 23 is connected to a distal end portion of the boom 21.

The arm cylinder 24 is an actuator for rotating the arm 23 with respect to the boom 21. A proximal end portion and a distal end portion of the arm cylinder 24 are rotatably supported on the boom 21 and the arm 23 respectively. The bucket 25 is connected to a distal end portion of the arm 23.

The bucket cylinder 27 is an actuator for rotating the bucket 25 with respect to the arm 23. A proximal end portion of the bucket cylinder 27 is rotatably supported on the arm 23. A distal end portion of the bucket cylinder 27 is rotatably supported on the arm 23 and the bucket 25 by way of a link portion 26 such that the bucket 25 which is the attachment 25 is rotated by the bucket cylinder 27 with respect to the arm 23.

The construction machine 10 further includes a first angle sensor 41, a second angle sensor 42, a third angle sensor 43, a fourth angle sensor 44, an abnormality degree measuring part 45, a plurality of area sensors, a plurality of load measuring parts, and an inclination sensor 48.

The first angle sensor 41 is mounted on a rotating shaft portion of the boom 21 which is rotatably supported on the upper slewing body 14, and measures a rotation angle of the boom 21 with respect to the upper slewing body 14. The second angle sensor 42 is mounted on a rotating portion of the arm 23 which is rotatably supported on the boom 21, and measures a rotation angle of the arm 23 with respect to the boom 21.

The third angle sensor 43 is mounted on the bucket (attachment) 25 which is rotatably supported on the arm 23, and measures a rotation angle of the bucket 25 with respect to the arm 23. The fourth angle sensor 44 is mounted on the slewing shaft 13 of the upper slewing body 14 which is mounted on the lower travelling body 12 so as to be slewable, and measures a rotation angle of the upper slewing body 14 with respect to the lower travelling body 12.

Each of the first to fourth angle sensors 41 to 44 is formed of a rotary encoder, for example. Each of the first to fourth angle sensors 41 to 44 detects an angle of a measurement target at a fixed cycle, and constantly transmits detected angle data to the control device.

The abnormality degree measuring part 45 is a sensor configured to measure an abnormality degree which is a value indicating a degree of abnormality of an internal state of the construction machine 10. In the present embodiment, the abnormality degree measuring part 45 is a temperature sensor which detects a state of an engine oil, specifically, a temperature of the engine oil. The abnormality degree measuring part 45 measures the abnormality degree at a fixed cycle, and constantly transmits the measured abnormality degree data to the control device.

The plurality of area sensors include: a first area sensor 46 configured to detect a first peripheral object when the first peripheral object is positioned within a first area around the construction machine 10; and a second area sensor 47 configured to detect a second peripheral object when the second peripheral object is positioned within a second area around the construction machine 10. As shown in FIGS. 1 and 2, in the present embodiment, the first area and the second area are areas which differ from each other behind the construction machine 10. The first area sensor 46 and the second area sensor 47 are respectively formed of an infrared sensor or the like, for example. When each of the first and second area sensors detects that a peripheral object is positioned within a measurement target area, the area sensor transmits the detected data to the control device.

Each of the first peripheral object and the second peripheral object may include various objects such as a moving object and a stationary object other than the construction machine 10. Specifically, each of the first peripheral object and the second peripheral object may be a vehicle, a building, a surface portion of the ground such as sand or asphalt, for example.

As shown in FIG. 5, the plurality of load measuring parts include: a load measuring part 51 which measures a magnitude of a load applied to the boom cylinder 22; a load measuring part 52 which measures a magnitude of a load applied to the arm cylinder 24; and a load measuring part 53 which measures a magnitude of a load applied to the bucket cylinder 27. Further, the plurality of load measuring parts further include: a load measuring part not shown in the drawing which measures a magnitude of a load applied to the travelling drive device that is an actuator for driving the lower travelling body 12; and a load measuring part 54 which measures a magnitude of a load applied to the slewing motor 28 that is an actuator for slewing the upper slewing body 14. Each of the plurality of load measuring parts is formed of a pressure sensor, for example. Each of the plurality of load measuring parts measures a load applied to a measurement object at a fixed cycle, and constantly transmits the measured load data to the control device.

The inclination sensor 48 measures an inclination of the construction machine 10 with respect to a horizontal direction or a horizontal plane. The inclination sensor 48 detects an inclination angle of the construction machine 10 with respect to the horizontal direction or the horizontal plane at a fixed cycle, and constantly transmits the detected inclination angle data to the control device.

The abnormality degree measuring part 45 is not limited to a temperature sensor which detects a temperature of the engine oil. The abnormality degree measuring part 45 may be a measuring instrument for measuring a residual amount of an engine oil, a pressure of a hydraulic circuit, a residual amount of an oil in the hydraulic circuit, a temperature of a working oil in the hydraulic circuit, a temperature of a lubricating oil, a degree of wear of a replacement part, and a usage time of the replacement part, a voltage of a battery or the like. It is sufficient for the abnormality degree measuring part 45 to measure the degree of abnormality (abnormality degree) of an internal state of the construction machine 10. The abnormality degree measuring part 45 may measure an internal state of a portion other than the above exemplified portions.

Each of the plurality of load measuring parts is not limited to the pressure sensor. It is sufficient for each of the plurality of load measuring parts to detect a magnitude of a load applied to the corresponding actuator, and each of the plurality of load measuring parts may be another measuring instrument such as a strain gauge.

The construction machine 10 further includes: operation parts each receiving an operation by an operator; contact parts each being a part of the construction machine 10, each of the contact parts being brought into contact with a body of an operator who operates the operation parts, each of the contact parts being a part other than the operation parts; and a plurality of vibration applying devices each applying vibration to a target portion which is at least a part of a portion which is brought into contact with the body of the operator who operates the operation parts. The target portion may be at least a portion of the operation parts, for example. The target portion may be at least a portion of the contact parts, for example.

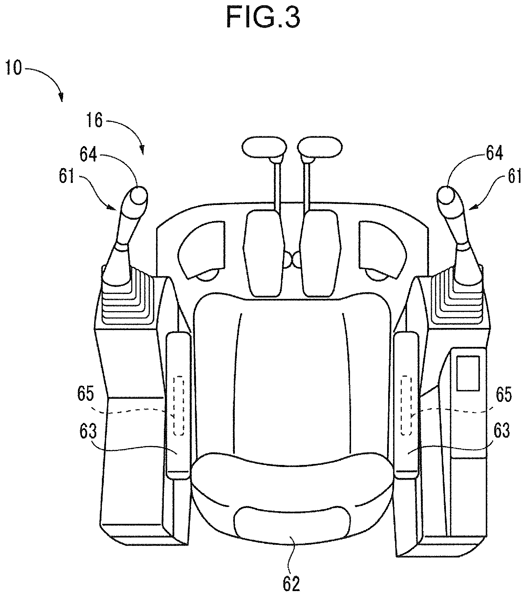

Specifically, as shown in FIG. 3, the operation parts include a pair of left and right operation levers 61 each receiving an operation by an operator. The contact parts include a seat 62 on which an operator sits, and a pair of left and right armrests 63 on which the operator places his or her arms. The pair of operation levers 61, the seat 62, the pair of armrests 63, and the plurality of vibration applying devices are disposed in the operation room 16.

The plurality of vibration applying devices include: a pair of vibration applying devices 64 provided to the pair of operation levers 61 respectively; and a pair of vibration applying devices 65 provided to the pair of armrests 63 respectively.

The pair of vibration applying devices 64 applies vibration to the pair of operation levers 61 respectively. The pair of vibration applying devices 64 is provided to the pair of operation levers and hence, alarm information is transmitted to the operator via the operation levers which the operator grasps with his/her hands with certainty. In the embodiment, the pair of vibration applying devices 64 is mounted on the operation levers 61 each being an example of the operation part, but the present invention is not limited to such a configuration, and the vibration applying device may be provided to other operation part such as an operation pedal or a handle not shown in the drawing.

The pair of vibration applying devices 65 applies vibration to the pair of armrests 63 respectively. The pair of vibration applying devices 65 is provided to the pair of armrests 63 and hence, the vibrations are transmitted to the operator via the arms of the operator, and it is possible to improve the perception of the operator to alarm information.

In this embodiment, the pair of armrests 63 is exemplified as the contact parts to which the vibration applying devices are provided respectively, but the contact parts are not limited to the pair of armrests 63. The vibration applying device may be provided to the seat 62 (including a seat cushion, a seat back, a footrest, a headrest) as the contact part, or on a floor.

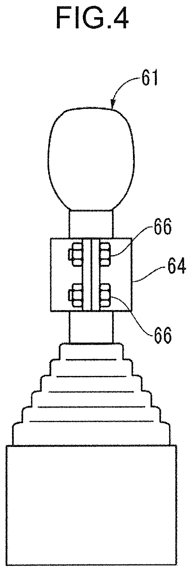

As shown in FIG. 4, each of the pair of vibration applying devices 64 is detachably mounted on the operation lever 61. Specifically, each of the pair of vibration applying devices 64 is arranged so as to surround the corresponding operation lever 61, and is fastened by a fastening member 66. In the embodiment, the vibration applying device 64 is arranged on a vertically extending bar of the operation lever 61, but the present invention is not limited to such a configuration. The vibration applying device 64 may be mounted on a knob portion of the operation lever 61, or may be disposed at a proximal end portion of the bar of the operation lever 61. It is sufficient for the vibration applying device 64 that the vibration can be transmitted to the operator, therefore, a shape and a mounting mode of the vibration applying device 64 are not limited.

Next, a functional configuration of the construction machine 10 is described with reference to a block diagram shown in FIG. 5. As shown in FIG. 5, the construction machine 10 includes the operation room 16 and a main body 11 which is a part of the construction machine 10 other than the operation room 16. The main body 11 includes a calculation part 55, a control device 56, and a communication device 57. The calculation part 55, the control device 56, and a control device 72 described below form a controller. The controller is formed of a computer, for example. The operation room 16 further includes the seat 62, the pair of armrests 63, and the operation parts which includes the pair of operation levers 61. Besides these parts, the operation room 16 further includes a communication device 71, the control device 72, an interface 73, and the vibration applying devices 64, 65.

The calculation part 55 calculates coordinates of a specific portion of the construction machine 10 in a machine coordinate system based on angle information inputted from the first angle sensor 41, the second angle sensor 42, the third angle sensor 43 and the fourth angle sensor 44 respectively.

The calculation result calculated by the calculation part 55 is inputted to the control device 56. The communication device 57 transmits information outputted from the control device 56 to the communication device 71 of the operation room 16.

To the control device 56, signals output from the abnormality degree measuring part 45, the plurality of area sensors 46, 47, load measuring parts 51, 52 and 53, the slewing motor load measuring part 54, a load measuring part (not shown in the drawing) of the drive device, and the inclination sensor 48 respectively are input. Further, the control device 56 outputs signals for controlling the operations of the boom cylinder 22, the arm cylinder 24, the bucket cylinder 27, the slewing motor 28, and the drive device (not shown in the drawing) respectively.

The communication device 71 disposed in the operation room 16 of the construction machine 10 mutually transmits information with the communication device 57 of the main body 11. The information which the communication device 71 receives is inputted to the control device 72. The interface 73 is connected to the control device 72. The control device 72 controls an operation of the pair of vibration applying devices 64 provided to the pair of operation levers 61 and an operation of the pair of vibration applying devices 65 provided to the pair of armrests 63.

Each of the vibration applying devices 64, 65 can performs: a first vibration applying operation for applying a vibration having a first vibration pattern to the target portion; a second vibration applying operation for applying a vibration having a second vibration pattern which differs from the first vibration pattern to the target portion; and a third vibration applying operation for applying a vibration having a third vibration pattern which differs from the first vibration pattern and the second vibration pattern to the target portion.

The construction machine 10 includes an index acquisition part which acquires an index value indicating a situation of the construction machine 10. The control device 72 causes the vibration applying devices 64, 65 to perform the first vibration applying operation when the index value acquired by the index acquisition part satisfies a predetermined first condition corresponding to a first situation of the construction machine 10. Further, the control device 72 causes the vibration applying devices 64, 65 to perform the second vibration applying operation when the index value acquired by the index acquisition part satisfies a predetermined second condition corresponding to a second situation of the construction machine 10. In a case where a predetermined third condition corresponding to a third situation of the construction machine 10 is further set, the control device 72 causes the vibration applying device to perform the third vibration applying operation when the index value acquired by the index acquisition part satisfies the third condition corresponding to the third situation of the construction machine 10. The same vibration applying application is performed in the same manner with respect to a case where a fourth condition, a fifth condition and the like are further set.

Each of the first situation, the second situation and the third situation is one of various situations in which the construction machine 10 is placed, and the first situation, the second situation and the third situation differ from each other.

The first condition, the second condition, and the third condition are conditions corresponding to the first situation, the second situation, and the third situation respectively. These conditions differ from each other. Specifically, when the construction machine 10 is in the first situation, the index value satisfies the first condition, when the construction machine 10 is in the second situation, the index value satisfies the second condition, and when the construction machine 10 is in the third situation, the index value satisfies the third condition. The first condition, the second condition, and the third condition are respectively stored in at least one of the control devices 56, 72. Each of these conditions may be set in advance and may be stored in advance in at least one of the control devices 56 and 72. With respect to the respective conditions, the corresponding condition may be inputted by an operator using the interface 73, and the inputted condition may be stored in at least one of the control devices 56, 72.

The first vibration pattern, the second vibration pattern, and the third vibration pattern are vibration patterns which differ from each other. The first vibration pattern, the second vibration pattern, and the third vibration pattern are differ from each other, for example, in frequency of vibration, amplitude of vibration, intervals of vibration and the like.

The index value includes an external environment index value and an internal environment index value. The external environment index value is an index value which changes corresponding to the relative position between the construction machine 10 and at least one peripheral object existing around the construction machine 10. The internal environment index value is an index value which indicates an internal state of the construction machine 10 or a posture of the construction machine 10 which changes as the construction machine 10 operates.

As the external environment index value, a target distance, a plurality of area index values and the like can be exemplified. Further, as the internal environment index value, an abnormality degree, a magnitude of a load applied to the actuator, a magnitude of an inclination of the construction machine and the like can be exemplified. However, the external environment index value and the internal environment index value are not limited to the above-exemplified index values.

The target distance is a distance from the specific portion of the construction machine 10 to a target position. The target position is a position set as a destination to which the specific portion of the construction machine 10 moves.

Each of the plurality of area index values is a value indicating whether or not a peripheral object is detected by the corresponding area sensor among the plurality of area sensors.

The abnormality degree is a value indicating a degree of abnormality of the internal state of the construction machine 10.

The index acquisition part is provided to the construction machine 10 corresponding to a kind of an index value as an object to be acquired. Specifically, when the index value includes the target distance, the index acquisition part includes the first to fourth angle sensors 41 to 44 and the calculation part 55. When the index value includes the area index values, the index acquisition part includes the first area sensor 46 and the second area sensor 47. When the index value includes the abnormality degree, the index acquisition part includes the abnormality degree measuring part 45. When the index value includes a magnitude of a load applied to the actuator, the index acquisition part includes at least one of the plurality of load measuring parts. When the index value includes a magnitude of an inclination of the construction machine, the index acquisition part includes the inclination sensor 48.

Hereinafter, the configuration of the construction machine 10 when the index value is the target distance is described more specifically.

The interface 73 is configured such that an operator can input a target position in the machine coordinate system, that is, the target position which becomes the destination of the specific portion of the construction machine 10. The target position may be specified by inputting coordinates corresponding to the target position by the operator using the interface 73. Further, the target position may be specified as follows. That is, the target position may be specified such that image information on the surrounding of the construction machine 10 is acquired by a 3D scanner (three-dimensional scanner) or an imaging device provided to the construction machine 10, an operator selects a position corresponding to the target position on a 3D image acquired by the 3D scanner or an image imaged by the imaging device, and the control device 72 converts the selected position into coordinates corresponding to the target position.

The specific portion is any portion of the construction machine 10. Specifically, the specific portion is set at a distal end portion of the attachment 25, for example. The specific portion may be set in advance or may be set based on information which the operator inputs using the interface 73.

The calculation part 55 calculates coordinates of the distal end portion of the attachment 25 based on the angle information inputted from the first to fourth angle sensors 41 to 44. Further, the calculation part 55 calculates a distance (target distance) from the distal end portion of the attachment 25 to the target position based on the calculated coordinates of the distal end portion of the attachment 25 and the coordinates of the target position inputted using the interface 73.

Further, even in a case where a position and a posture of the attachment 25 are changed by operating the operation lever 61 by the operator, the calculation part 55 calculates the target distance from the distal end portion of the attachment 25 to the target position as the index value. In the present embodiment, the index value is constituted of a value indicating a situation of the construction machine 10.

The first condition, the second condition, and the third condition may be conditions which are set in advance and are stored in at least one of the control devices 56, 72, and may be conditions stored in at least one of the control devices 56, 72 based on the information which the operator inputs using the interface 73. In a case where the target distance which is the index value satisfies any of the first to third conditions, the control device 72 vibrates the vibration applying devices 64, 65 in accordance with the vibration pattern corresponding to the satisfied condition.

The first condition is a condition that the target distance is within a predetermined first distance range. The second condition is a condition that the target distance is within a predetermined second distance range which differs from the first distance range. The third condition is a condition that the target distance is within a predetermined third distance range which differs from the first distance range and the second distance range. Each of the first to third distance ranges is set so as not to overlap with other distance ranges. The second distance range is a range closer to the target position than the first distance range, and the third distance range is a range closer to the target position than the second distance range.

Specifically, for example, the first condition is set to a condition that the target distance from the distal end portion of the attachment 25 to the target position is more than 1m and equal to or less than 2m, the second condition is set to a condition that the target distance is more than 0.5m and equal to or less than 1m, and the third condition is set to a condition that the target distance is equal to or less than 0.5m.

In a case where the target distance satisfies the first condition, the control device 72 vibrates the vibration applying devices 64 and 65 in the first vibration pattern (for example, a vibration pattern in a low frequency range). Further, in a case where the target distance satisfies the second condition, the control device 72 vibrates the vibration applying devices 64, 65 in the second vibration pattern (for example, a vibration pattern in a middle frequency range). In a case where the target distance satisfies the third condition, the control device 72 vibrates the vibration applying devices 64, 65 in the third vibration pattern (for example, a vibration pattern in a high frequency range).

The construction machine 10 according to this embodiment is configured such that the communication device 57 mounted on the main body 11 and the communication device 71 disposed in the operation room 16 mutually transmit information to each other wirelessly. However, the present invention is not limited to such a configuration. In the construction machine 10, the communication device 57 and the communication device 71 may be connected to each other by wire. Further, in the construction machine 10, the control device 56 and the control device 72 may be formed of one control device while omitting the communication devices 57 and 71.

Further, in the construction machine 10, in a case where the communication device 57 mounted on the main body 11 and the communication device 71 disposed in the operation room 16 mutually transmit information to each other wirelessly, the operation room 16 may be disposed at a position away from the main body 11, and the operation parts 61 may be remote control operation parts each performing a remote control of the construction machine 10.

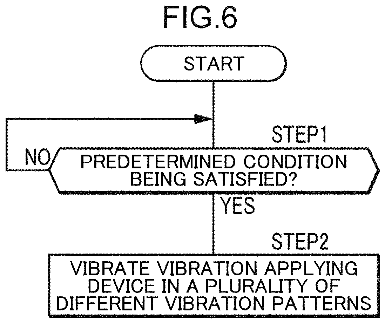

Next, an operation of the above described construction machine 10 is explained based on the flowchart shown in FIG. 6. As shown in FIG. 6, when a control of the construction machine 10 is started, the control devices 56, 72 determine whether or not an index value indicating a situation of the construction machine 10 satisfies a predetermined condition (STEP 1). Specifically, the predetermined condition includes at least the first condition and the second condition, the control devices 56, 72 determine whether or not the index value satisfies the first condition and, at the same time, determine whether or not the index value satisfies the second condition.

In a case where the index value satisfies the predetermined condition (YES in STEP1), the control devices 56, 72 perform a processing shown in STEP2. In a case where the index value does not satisfy the predetermined condition (NO in STEP1), the control devices 56, 72 perform a processing shown in STEP1 again.

In a case where the index value satisfies the first condition, the control devices 56, 72 vibrate the vibration applying devices 64, 65 in accordance with the first vibration pattern. Further, in a case where the index value satisfies the second condition, the control devices 56, 72 vibrate the vibration applying devices 64, 65 in accordance with the second vibration pattern. The vibration applying devices 64, 65 vibrate the operation lever 61 and the like with which the operator contacts, for example. With such a configuration, the operator can surely perceive the first situation and the second situation among the various different situations in which the construction machine 10 is placed, and it is possible to notify the operator of various changes in situation of the construction machine 10 appropriately. With such a configuration, the operability of the construction machine 10 can be enhanced.

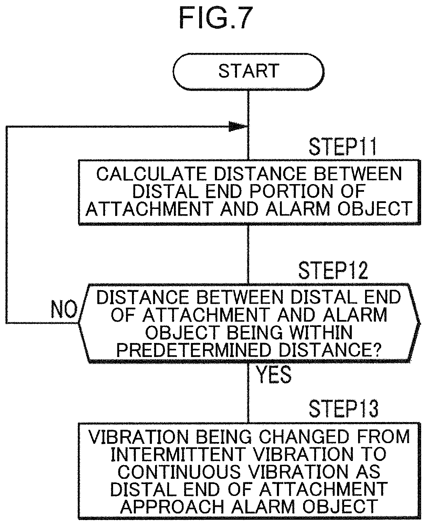

Next, a specific example of the operation of the construction machine 10 is explained based on a flowchart shown in FIG. 7. In the specific example shown in FIG. 7, the index value is a distance (target distance) from the distal end portion of the attachment 25 to a position of the alarm object (target position).

When the control of the construction machine 10 is started, the calculation part 55 calculates the index value by calculating a distance between the distal end portion of the attachment 25 and the target position of the alarm object (STEP 11).

The control devices 56, 72 determine whether or not the index value which is the target distance between the distal end portion of the attachment 25 and the target position of the alarm object satisfies a predetermined condition. In other words, the control devices 56, 72 determine whether or not the target distance is included in a predetermined distance range (STEP 12). Specifically, in the present embodiment, the control devices 56, 72 determine whether or not the target distance satisfies the first condition, the second condition, and the third condition respectively.

In a case where the index value is included in a predetermined distance range, specifically, in a case where the index value satisfies any one of the first condition, the second condition and the third condition (YES in STEP12), the control devices 56, 72 perform the processing shown in STEP13. In a case where the index value is not included in the predetermined distance range (NO in STEP12), the control devices 56 and 72 perform the processing shown in STEP11 again.

The control devices 56, 72 vibrate the vibration applying devices 64, 65 in accordance with a vibration pattern corresponding to a condition that the target distance which is a distance from a position of the warning object to the distal end portion of the attachment 25 satisfies (STEP 13). Specifically, in the processing where the distal end portion of the attachment 25 approaches the position of the warning object (target position), in a case where the target distance changes to a value included in a distance range which satisfies the first condition, a value included in a distance range which satisfies the second condition, and a value included in a distance range which satisfies the third condition in this order, the first to third vibration patterns change as follows, for example. The first to third vibration patterns by the vibration applying devices 64 and 65 may be set such that, in the processing, the vibration is changed from an intermittent vibration to a continuous vibration. Further, the first to third vibration patterns may be set such that, in the processing, at least one of the frequency and the amplitude of vibration gradually increases.

By performing the control as shown in FIG. 7, the operator can perceive a change in the target distance from the distal end portion of the attachment 25 which is a specific portion of the construction machine 10 to the target position by the vibration.

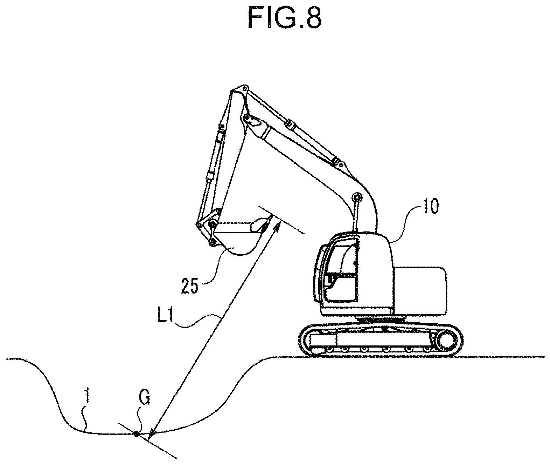

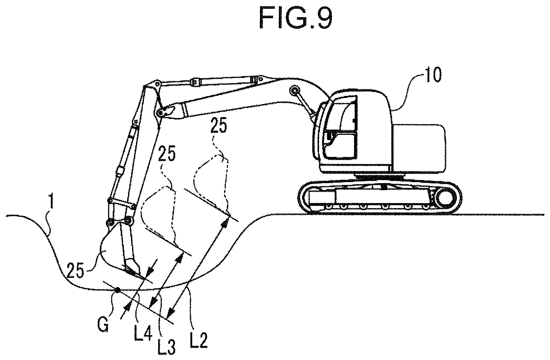

Next, a further specific example of the operation of the construction machine 10 is explained with reference to FIGS. 8 and 9. When the construction machine 10 takes a posture shown in FIG. 8, the attachment 25 of the construction machine 10 is at a position close to the main body 11 and at a high position. A recessed portion 1 is formed in front of the construction machine 10, and a bottom of the recessed portion 1 is input by the operator as the target position G and stored in the control devices 56, 72. In the posture shown in FIG. 8, a distance from the distal end portion of the attachment 25 as the specific portion to the target position G (target distance) is L1.

FIG. 9 shows a position and a posture of the attachment 25 when the distance from the distal end portion of the attachment 25 to the target position G decreases in the order of a target distance L2, a target distance L3, and a target distance L4. The target distance L2 satisfies the first condition, that is, a condition that the distance from the distal end portion of the attachment 25 to the target position G is more than 1 m and equal to or less than 2 m. The target distance L3 satisfies the second condition, that is, a condition that the distance from the distal end portion of the attachment 25 to the target position G is more than 0.5 m and equal to or less than 1 m. The target distance L4 satisfies the third condition, that is, a condition that the distance from the distal end portion of the attachment 25 to the target position G is equal to or less than 0.5 m.

When the distal end portion of the attachment 25 approaches the target position G from the position shown in FIG. 8, and the target distance from the distal end portion of the attachment 25 to the target position G becomes L2 shown in FIG. 9 and is included in the distance range that satisfies the first condition, the control devices 56 and 72 vibrate the vibration applying devices 64, 65 (see FIG. 3) at first frequency.

When the attachment 25 further moves and the target distance from the distal end portion of the attachment 25 to the target position G becomes L3 shown in FIG. 9 and is included in the distance range which satisfies the second condition, the control devices 56, 72 vibrate the vibration applying devices 64, 65 (see FIG. 3) at second frequency. When the attachment 25 further moves and the target distance from the distal end portion of the attachment 25 to the target position G becomes L4 shown in FIG. 9 and is included in the distance range which satisfies the third condition, the control devices 56, 72 vibrate the vibration applying devices 64, 65 (see FIG. 3) at third frequency. Out of the first to third frequencies, for example, the first frequency is set to be the smallest frequency, and the third frequency is set to be the largest frequency.

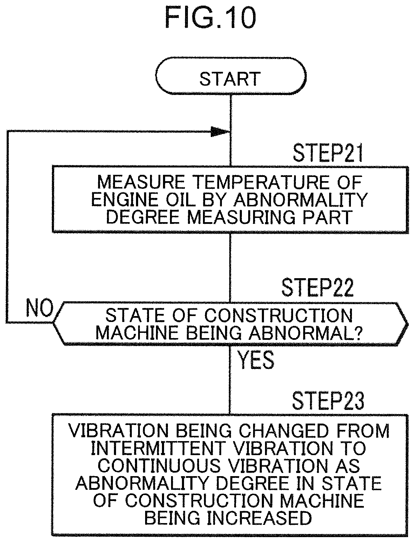

Next, another specific example of the operation of the construction machine 10 is explained based on a flowchart shown in FIG. 10. In the specific example shown in FIG. 10, the index value is an abnormality degree which is a value indicating a degree of abnormality of the internal state of the construction machine 10. Specifically, the abnormality degree is a temperature of an engine oil which is an oil used for the engine in the construction machine 10, for example.

As shown in FIG. 10, when the control of the construction machine 10 is started, the abnormality degree measuring part 45 (see FIG. 5) which is a temperature sensor (thermometer) measures a temperature of the engine oil (STEP 21), and the measured temperature information is inputted to the control device 56. The control devices 56, 72 determine whether or not the abnormality degree which is the temperature of the engine oil (the index value) is within a predetermined first temperature range, and is within a predetermined second temperature range (STEP 22).

The first condition is a condition that the abnormality degree is within the predetermined first temperature range, and the second condition is a condition that the abnormality degree is within the predetermined second temperature range which differs from the first temperature range. The minimum value in the first temperature range is smaller than the minimum value in the second temperature range. The first and second temperature ranges are set such that one of the first and second temperature ranges does not overlap with the other temperature range.

In a case where the index value (abnormality degree) exceeds a predetermined appropriate temperature range, that is, in a case where the abnormality degree satisfies the first condition and a temperature of the engine oil is equal to or more than the minimum value in the first temperature range (YES in STEP22), the control devices 56, 72 perform the processing shown in STEP23. When the abnormality degree is equal to or more than the minimum value in the first temperature range, it is determined that a temperature of the engine oil is abnormal.

On the other hand, in a case where the index value (abnormality degree) is included in the appropriate temperature range, that is, in a case where the abnormality degree is less than the minimum value in the first temperature range (NO in STEP22), the control devices 56, 72 perform the processing shown in STEP21 again. When the abnormality degree is included in the appropriate temperature range, it is determined that the temperature of the engine oil is normal.

The control devices 56, 72 vibrate the vibration applying devices 64, 65 in accordance with a vibration pattern corresponding to the condition which the index value (abnormality degree) satisfies (STEP 23). Specifically, in the processing where a temperature of the engine oil increases exceeding the appropriate temperature range which is a range of normal values and, in a case where the temperature of the engine oil changes in the order of a value included in the first temperature range which satisfies the first condition, and a value included in the second temperature range which satisfies the second condition, the first and second vibration patterns change as follows, for example. The first and second vibration patterns by the vibration applying devices 64, 65 may be set such that, in the processing, the first and second vibration patterns change from an intermittent vibration to a continuous vibration. Further, the first and second vibration patterns may be set such that, in the processing, at least one of the frequency and the amplitude of a vibration gradually increases.

By performing the control as shown in FIG. 10, the operator can perceive the change in abnormality degree depending on the change in vibration (for example, the change in frequency, the change in amplitude and the like). The abnormality degree is not limited to the temperature of the engine oil, and may be a state of the working oil, a state of the lubricating oil, a state of the replacement part, a state of the battery and the like. Accordingly, the operator can perceive a degree of abnormality of the internal state of the construction machine 10 depending on the vibration corresponding to the abnormality degree of these states.

The present invention is not limited to the above embodiment. The present invention includes the following modes, for example.

The external environment index value may include a first area index value indicating whether or not a first peripheral object is detected by the first area sensor, and a second area index value indicating whether or not the second peripheral object is detected by the second area sensor. In such a case, the first condition includes a condition that the first area index value indicates that the first peripheral object has been detected by the first area sensor 46, and the second condition includes a condition that the second area index value indicates that the second peripheral object has been detected by the second area sensor 47.

The first area index value includes a value of an area identifier for identifying the first area, the second area index value includes a value of an area identifier for identifying the second area.

In a case where the first area index value satisfies the first condition, the construction machine 10 is placed in a situation that the first peripheral object exists in the first area. In a case where the second area index value satisfies the second condition, the construction machine 10 is placed in a situation that the second peripheral object exists in the second area. In a case where the first area index value satisfies the first condition, that is, in a case where the first peripheral object is detected in the first area, the vibration of the first vibration pattern is transmitted to the operator, and in a case where the second peripheral object is detected in the second area, the vibration of the second vibration pattern is transmitted to the operator. In this embodiment, the construction machine 10 includes the two area sensors 46, 47, but the present invention is not limited to such a configuration, and the construction machine 10 may include three or more area sensors.

In this mode, the operator can perceive the first situation where the first peripheral object exists in the first area, and the second situation where the second peripheral object exists in the second area by vibration.

Further, the internal environment index value may include a magnitude of a load applied to at least one actuator out of the plurality of actuators. In such a case, the index acquisition part includes a load measuring part which is configured to measure a magnitude of the load. The first condition includes a condition that a magnitude of the load measured by the load measuring part is within a predetermined first load range. The second condition includes a condition that a magnitude of the load measured by the load measuring part is within a predetermined second load range which differs from the first load range.

In this mode, a vibration of the vibration pattern corresponding to a magnitude of the load applied to the at least one actuator is transmitted to the operator. With such a configuration, it is possible allow the operator to perceive an internal state of the construction machine which changes corresponding to an operation of the construction machine, that is, a magnitude of a load applied to the at least one actuator by vibration.

Further, the internal environment index value may include a magnitude of an inclination of the construction machine with respect to a horizontal direction. In such a case, the index acquisition part includes an inclination sensor which detects an inclination of the construction machine with respect to the horizontal direction. The first condition includes a condition that an inclination of the construction machine detected by the inclination sensor is within a predetermined first inclination range. The second condition includes a condition that an inclination of the construction machine detected by the inclination sensor is within a predetermined second inclination range which differs from the first inclination range.

In this mode, a vibration of the vibration pattern corresponding to a magnitude of the inclination of the construction machine with respect to the horizontal direction is transmitted to the operator. With such a configuration, it is possible to allow the operator to perceive a posture of the construction machine which changes corresponding to an operation of the construction machine, that is, a magnitude of the inclination of the construction machine.

Further, the predetermined condition and the predetermined plurality of vibration patterns can be changed or adjusted. Accordingly, by setting the vibration pattern such that each operator can easily perceive vibration, the operator can more easily perceive the vibration.

Further, in the embodiment, the vibration applying devices 64, 65 are provided to the operation parts 61 and the contact parts 63 respectively, but the present invention is not limited to such a configuration, and it is sufficient for the vibration applying devices 64, 65 to be provided to at least either one of the operation parts 61 and the contact parts 62, 63.

In the construction machine 10 according to the embodiment, although the operation of the construction machine 10 is remotely controlled by the remote control operation part, the operation of the construction machine 10 is not limited to such an operation. The operation of the construction machine 10 may be operated by an operation part disposed in the operation room (cab) 16 of the upper slewing body 14.

Although the construction machine 10 according to the embodiment is a hydraulic excavator, the construction machine 10 is not limited to the hydraulic excavator, and may be another construction machine such as a crane or a dozer, for example.

The index value in the construction machine 10 may include both of the external environment index value and the internal environment index value. The index value may include two or more selected from a group consisting of the target distance, the area index value, the abnormality degree, the magnitude of the load applied to the actuator, and the magnitude of the inclination of the construction machine 10, and may include index value other than these index values.

As described above, there is provided the construction machine capable of appropriately notifying an operator of various changes in situations of the construction machine.
[1] Provided is the construction machine which includes: a lower travelling body; an upper slewing body mounted on the lower travelling body so as to be slewable; a working device rotatably connected to the upper slewing body; an attachment connected to a distal end of the working device; an operation part which receives an operation by an operator for operating at least one of the lower travelling body, the upper slewing body, the working device, and the attachment; a vibration applying device which applies a vibration to a target portion that is at least a part of a portion of the construction machine which is brought into contact with a body of the operator who operates the operation part; a control device which controls an operation of the vibration applying device; and an index acquisition part which acquires an index value indicating a situation of the construction machine. The vibration applying device is configured to perform a first vibration applying operation for applying a vibration having a first vibration pattern to the target portion, and a second vibration applying operation for applying a vibration having a second vibration pattern which differs from the first vibration pattern to the target portion. The control device is configured such that, the control device causes the vibration applying device to perform the first vibration applying operation when the index value acquired by the index acquisition part satisfies a predetermined first condition corresponding to a first situation of the construction machine, and the control device causes the vibration applying device to perform the second vibration applying operation when the index value acquired by the index acquisition part is a predetermined second condition corresponding to a second situation of the construction machine which differs from the first condition.
   In this construction machine, among various situations in which the construction machine is placed, the first condition and the second condition which respectively correspond to the first situation and the second situation are set. In a case where the index value acquired by the index acquisition part, that is, the index value indicating a situation of the construction machine satisfies the first condition, a vibration corresponding to the first vibration pattern is applied to the target portion by the vibration applying device. On the other hand, in a case where the index value satisfies the second condition, a vibration according to the second vibration pattern which differs from the first vibration pattern is applied to the target portion by the vibration applying device. With such a configuration, the operator can surely perceive the first situation and the second situation in which the construction machine is placed respectively based on the vibration of the first vibration pattern and the vibration of the second vibration pattern which differ from each other. Specifically, in the construction machine, the operator can perceive not only whether the situation of the construction machine is the first situation or the second situation, but also a state that the situation of the construction machine is changed from the first situation to the second situation and a state that the situation of the construction machine is changed from the second situation to the first situation. With such a configuration, it is possible to appropriately notify the operator of various changes in situations of the construction machine. Accordingly, it is possible to enhance the operability of the construction machine.
[2] In the construction machine, it is foreseen that the index value include an external environment index value which changes corresponding to a relative position between the construction machine and at least one peripheral object existing around the construction machine.
   In this mode, the index value includes the external environment index value and hence, a vibration of the vibration pattern corresponding to a condition which the external environment index value satisfies, that is, a vibration of the vibration pattern corresponding to a relative position between the construction machine and the at least one peripheral object can be transmitted to the operator. With such a configuration, the operator can perceive a situation (external situation) of the construction machine which changes corresponding to the relative position.
[3] In the construction machine, it is preferable that the index value include an internal environment index value which indicates an internal state of the construction machine or a posture of the construction machine which changes as the construction machine operates.
   In this mode, the index value includes the internal environment index value and hence, a vibration of a vibration pattern corresponding to the condition that the internal environment index value satisfies, that is, the vibration of vibration pattern corresponding to the internal state of the construction machine or the posture of the construction machine is transmitted to the operator. With such a configuration, the operator can perceive the internal state of the construction machine or the posture of the construction machine which changes corresponding to the operation of the construction machine.
[4] In the construction machine, it is foreseen that the at least one peripheral object is a target object existing at a target position set as a destination to which a specific portion of the construction machine moves, the external environment index value include a target distance from the specific portion of the construction machine to the target position, the first condition include a condition that the target distance is within the predetermined first distance range, the second condition include a condition that the target distance is within the predetermined second distance range which differs from the first distance range.
   In this mode, a vibration of a vibration pattern corresponding to a condition that the target distance satisfies is transmitted to the operator. Accordingly, the operator can perceive an approximate distance from the specific portion of the construction machine to the target position by the vibration. Further, the operator can perceive a change in relative position between the specific portion and the target object. That is, the operator can perceive a fact that a situation of the construction machine changes from the first situation (the first situation where the target distance is within the first distance range) to the second situation (the second situation where the target distance is within the second distance range), and a fact that the situation of the construction machine changes from the second situation to the first situation.
[5] In the construction machine, it is foreseen that the specific portion is a distal end portion of the attachment.

In this mode, the specific portion is the distal end portion of the attachment and hence, the operator can perceive an approximate distance from the distal end portion of the attachment to the target position by vibrating.

Specifically, this mode is particularly effective when a work is performed where the attachment is made to approach the target position. The operator can perceive a fact that a situation of the construction machine changes from the first situation where the target distance is within the first distance range to the second situation where the target distance is within the second distance range, that is, the second situation where the distal end portion of the attachment further approaches the target position compared to that in the first situation. In this mode, for example, the degree of alerting when the target distance from the distal end portion of the attachment to the target position is within the first distance range and the degree of alerting when the distal end portion of the attachment further approaches the target position, that is, when the target distance is within the second distance range can be made different from each other. With such a configuration, the operator can sensuously perceive the target distance between the attachment and the target position. Accordingly, the operability of the construction machine can be enhanced.

[6] In the construction machine, it is preferable that the internal environment index value include an abnormality degree which is a value indicating a degree of abnormality of an internal state of the construction machine, the index acquisition part include the abnormality degree measuring part which can measure the abnormality degree, the first condition include a condition that the abnormality degree measured by the abnormality degree measuring part is within a predetermined first range, the second condition include a condition that the abnormality degree measured by the abnormality degree measuring part is within a predetermined second range which differs from the first range.

In this mode, a vibration of the vibration pattern corresponding to the abnormality degree is transmitted to the operator. With such a configuration, the operator can perceive a degree of abnormality of the internal state of the construction machine which changes corresponding to the operation of the construction machine. As the abnormality degree , for example, a temperature of an engine oil, a working oil or a lubricating oil, a residual amount of the engine oil, the working oil or the lubricating oil, a degree of wear of a replacement part, a usage time of the replacement part, a voltage of a battery and the like can be exemplified.

[7] In the construction machine, it is preferable that with respect to at least one of the first vibration pattern and the second vibration pattern, the larger the abnormality degree, the larger a frequency of vibration by the vibration applying device becomes or the larger an amplitude of the vibration becomes.

In this mode, as the abnormality degree increases, the frequency or the amplitude of vibration of the at least one of the first vibration pattern and the second vibration pattern increases and hence, the operator can perceive a change in the abnormality degree depending on the change in frequency or the change in amplitude.

[8] In the construction machine, it is preferable that the at least one peripheral object include a first peripheral object and a second peripheral object, the index acquisition part include a first area sensor configured to detect the first peripheral object when the first peripheral object is positioned in a first area around the construction machine, and a second area sensor configured to detect the second peripheral object when the second peripheral object is positioned in a second area around the construction machine which differs from the first area, the external environment index value include a first area index value indicating whether or not the first peripheral object is detected by the first area sensor, and a second area index value indicating whether or not the second peripheral object is detected by the second area sensor, the first condition include a condition that the first area index value indicates that the first peripheral object is detected by the first area sensor, and the second condition include a condition that the second area index value indicates that the second peripheral object is detected by the second area sensor.

In this mode, the first area index value changes corresponding to the relative position between the construction machine and the first peripheral object, and specifically, the first area index value changes depending on whether or not the first peripheral object is detected in the first area. In the same manner, the second area index value changes corresponding to the relative position between the construction machine and the second peripheral object, and specifically, the second area index value changes depending on whether or not the second peripheral object is detected in the second area. In a case where the first area index value satisfies the first condition, that is, in a case where the first peripheral object is detected in the first area, the vibration of the first vibration pattern is transmitted to the operator, and in a case where the second peripheral object is detected in the second area, the vibration of the second vibration pattern is transmitted to the operator. With such a configuration, the operator can perceive the first situation where the first peripheral object exists in the first area and the second situation where the second peripheral object exists in the second area.

[9] It is preferable that the construction machine further includes a plurality of actuators which move the lower travelling body, the upper slewing body, the working device, and the attachment respectively, the internal environment index value includes a magnitude of a load applied to at least one of the plurality of actuators, the index acquisition part includes a load measuring part configured to measure the magnitude of the load, the first condition includes a condition that the magnitude of the load measured by the load measuring part is within a predetermined first load range, and the second condition includes a condition that the magnitude of the load measured by the load measuring part is within a predetermined second load range which differs from the first load range.

In this mode, a vibration of the vibration pattern corresponding to the magnitude of the load applied to the at least one actuator is transmitted to the operator. With such a configuration, the operator can perceive the magnitude of the load which changes corresponding to the operation of the construction machine by vibration.

[10] In the construction machine, the operation part may be a remote control operation part which allows an operator to perform a remote control of the construction machine.

In this mode, in a case where the construction machine is not only operated from an operation room disposed on the upper slewing body but also operated from an operation room disposed at a location away from the construction machine by a remote control, it is possible to allow the operator to surely perceive the respective first situation and second situation in which the construction machine is placed based on the vibration of the first vibration pattern and the vibration of the second vibration pattern which differ from each other. Accordingly, the operability of the construction machine can be enhanced.

[11] In the construction machine, it is preferable that the internal environment index value includes a magnitude of an inclination of the construction machine with respect to a horizontal direction, the index acquisition part includes an inclination sensor which detects the inclination of the construction machine with respect to the horizontal direction, the first condition includes a condition that the inclination of the construction machine detected by the inclination sensor is within a predetermined first inclination range, and the second condition includes a condition that the inclination of the construction machine detected by the inclination sensor is within a predetermined second inclination range which differs from the first inclination range.

In this mode, a vibration of the vibration pattern corresponding to the magnitude of the inclination of the construction machine with respect to the horizontal direction is transmitted to the operator. With such a configuration, the operator can perceive the magnitude of the inclination of the construction machine which changes corresponding to an operation of the construction machine.

[12] In the construction machine, it is preferable that the operation part include an operation lever, and the vibration applying device is mounted on the operation lever so as to vibrate the operation lever.

In this mode, the vibration by the vibration applying device which is mounted on the operation lever is transmitted to the operator via the operation lever which the operator grasps with his/her hand. Accordingly, the operator can perceive information (for example, alarm information) on a situation of the construction machine through the vibration applied to the operation lever.

[13] In the construction machine, it is preferable that the vibration applying device is detachably mounted on the operation lever.

In this mode, the vibration applying device can be optionally mounted on the operation lever of the construction machine on which the vibration applying device is not mounted in the standard specification.

[14] In the construction machine, it is preferable that the contact part includes an armrest, and the vibration applying device is mounted on the armrest so as to vibrate the armrest.

In this mode, the vibration generated by the vibration applying device provided to the armrest is transmitted to the operator via the armrest on which the operator's arm is placed. Accordingly, the operator can perceive the situation of the construction machine through the vibration applied to the armrest.

[15] In the construction machine, it is preferable that the first condition, the second condition, the first vibration pattern, and the second vibration pattern are changeable or adjustable.

In this mode, the operator can more easily perceive the vibration by changing or adjusting the condition and the vibration pattern such that the operator can easily perceive the vibration.

## Claims

1. A construction machine (10) comprising:
a lower travelling body (12);
an upper slewing body (14) mounted on the lower travelling body (12) so as to be slewable;
a working device (15) rotatably connected to the upper slewing body (14);
an attachment (25) connected to a distal end of the working device (15);
an operation part (61) which receives an operation by an operator for operating at least one of the lower travelling body (12), the upper slewing body (14), the working device (15), and the attachment (25);
a vibration applying device (64, 65) which applies a vibration to a target portion that is at least a part of a portion of the construction machine (10) which is brought into contact with a body of the operator who operates the operation part (61);
a control device (72) which controls an operation of the vibration applying device (64, 65); and
an index acquisition part (41 to 48, 51 to 54) which acquires an index value indicating a situation of the construction machine (10), wherein
the vibration applying device (64, 65) is configured to perform a first vibration applying operation for applying a vibration having a first vibration pattern to the target portion, and a second vibration applying operation for applying a vibration having a second vibration pattern different from the first vibration pattern to the target portion,
the control device (72) is configured to cause the vibration applying device (64, 65) to perform the first vibration applying operation when the index value acquired by the index acquisition part (41 to 48, 51 to 54) satisfies a predetermined first condition corresponding to a first situation of the construction machine (10), and to cause the vibration applying device (64, 65) to perform the second vibration applying operation when the index value acquired by the index acquisition part (41 to 48, 51 to 54) satisfies a predetermined second condition corresponding to a second situation of the construction machine (10) which differs from the first condition, and
the index value includes an external environment index value which changes corresponding to a relative position between the construction machine (10) and at least one peripheral object existing around the construction machine (10), **characterized in that**
the at least one peripheral object is a target object existing at a target position set as a destination to which a specific portion of the construction machine (10) moves,
the external environment index value includes a target distance from the specific portion of the construction machine (10) to the target position,
the first condition includes a condition that the target distance is within a predetermined first distance range, and
the second condition includes a condition that the target distance is within a predetermined second distance range which differs from the first distance range, the second distance range being a range closer to the target position than the first distance range, and
the specific portion is a distal end portion of the attachment (25).

2. The construction machine (10) according to claim 1, wherein the index value includes an internal environment index value indicating an internal state of the construction machine (10) or a posture of the construction machine (10) which changes as the construction machine (10) operates.

3. The construction machine (10) according to claim 2, wherein
the internal environment index value includes an abnormality degree which is a value indicating a degree of abnormality of an internal state of the construction machine (10),
the index acquisition part (41 to 48, 51 to 54) includes an abnormality degree measuring part (45) configured to measure the abnormality degree,
the first condition includes a condition that the abnormality degree measured by the abnormality degree measuring part (45) is within a predetermined first range, and
the second condition includes a condition that the abnormality degree measured by the abnormality degree measuring part (45) is within a predetermined second range which is different from the first range.

4. The construction machine (10) according to claim 3, wherein, with respect to at least one of the first vibration pattern and the second vibration pattern, the larger the abnormality degree, the larger a frequency of vibration by the vibration applying device (64, 65) becomes or the larger an amplitude of the vibration becomes.

5. The construction machine (10) according to claim 1, wherein
the at least one peripheral object includes a first peripheral object and a second peripheral object,
the index acquisition part (41 to 48, 51 to 54) includes a first area sensor configured to detect the first peripheral object when the first peripheral object is positioned in a first area around the construction machine (10), and a second area sensor (47) configured to detect the second peripheral object when the second peripheral object is positioned in a second area around the construction machine (10) which differs from the first area,
the external environment index value includes: a first area index value indicating whether or not the first peripheral object is detected by the first area sensor; and a second area index value indicating whether or not the second peripheral object is detected by the second area sensor (47),
the first condition includes a condition that the first area index value indicates that the first peripheral object is detected by the first area sensor, and
the second condition includes a condition that the second area index value indicates that the second peripheral object is detected by the second area sensor (47).

6. The construction machine (10) according to any one of claims 2, 3 and 4, further comprising a plurality of actuators (22, 24, 27, 28) which move the lower travelling body (12), the upper slewing body (14), the working device (15), and the attachment (25) respectively, wherein
the internal environment index value includes a magnitude of a load applied to at least one actuator out of the plurality of actuators (22, 24, 27, 28),
the index acquisition part (41 to 48, 51 to 54) includes a load measuring part (51 to 54) configured to measure the magnitude of the load,
the first condition includes a condition that the magnitude of the load measured by the load measuring part (51 to 54) is within a predetermined first load range, and
the second condition includes a condition that the magnitude of the load measured by the load measuring part (51 to 54) is within a predetermined second load range which is different from the first load range.

7. The construction machine (10) according to any one of claims 1 to 6, wherein the operation part (61) is a remote control operation part which allows the operator to perform a remote control of the construction machine (10).

8. The construction machine (10) according to any one of claims 2, 3, 4 and 6, wherein
the internal environment index value includes a magnitude of an inclination of the construction machine (10) with respect to a horizontal direction,
the index acquisition part (41 to 48, 51 to 54) includes an inclination sensor (48) which detects the inclination of the construction machine (10) with respect to the horizontal direction,
the first condition includes a condition that the inclination of the construction machine (10) detected by the inclination sensor (48) is within a predetermined first inclination range, and
the second condition includes a condition that the inclination of the construction machine (10) detected by the inclination sensor (48) is within a predetermined second inclination range which is different from the first inclination range.

9. The construction machine (10) according to any one of claims 1 to 8, wherein
the operation part (61) includes an operation lever (61), and
the vibration applying device (64, 65) is mounted on the operation lever (61) so as to vibrate the operation lever (61).

10. The construction machine (10) according to claim 9, wherein the vibration applying device (64, 65) is detachably mounted on the operation lever (61).

11. The construction machine (10) according to any one of claims 1 to 10, wherein
the target portion includes an armrest (63), and
the vibration applying device (64, 65) is mounted on the armrest (63) so as to vibrate the armrest (63).

12. The construction machine (10) according to any one of claims 1 to 11, wherein at least one of the first condition, the second condition, the first vibration pattern, and the second vibration pattern is changeable or adjustable.

## Patentansprüche

1. Baumaschine (10), umfassend:
einen unteren Fahrkörper (12);
einen oberen Schwenkkörper (14), der schwenkbar an dem unteren Fahrkörper (12) angebracht ist;
eine Arbeitsvorrichtung (15), die drehbar mit dem oberen Schwenkkörper (14) verbunden ist;
ein Anbaugerät (25), das mit einem distalen Ende der Arbeitsvorrichtung (15) verbunden ist;
ein Betätigungsteil (61), das eine Betätigung durch einen Bediener zum Betätigen von wenigstens dem unteren Fahrkörper (12), dem oberen Schwenkkörper (14), der Arbeitsvorrichtung (15) oder dem Anbaugerät (25) empfängt;
eine Vibrationsanlegevorrichtung (64, 65), die eine Vibration an einen Zielabschnitt anlegt, der wenigstens ein Teil eines Abschnitts der Baumaschine (10) ist, der in Kontakt mit einem Körper des Bedieners gebracht wird, der das Betätigungsteil (61) betätigt;
eine Steuervorrichtung (72), die einen Betrieb der Vibrationsanlegevorrichtung (64, 65) steuert; und
ein Indexerfassungsteil (41 bis 48, 51 bis 54), das einen Indexwert erfasst, der eine Situation der Baumaschine (10) angibt, wobei
die Vibrationsanlegevorrichtung (64, 65) dazu eingerichtet ist, einen ersten Vibrationsanlegevorgang zum Anlegen einer Vibration mit einem ersten Vibrationsmuster an den Zielabschnitt und einen zweiten Vibrationsanlegevorgang zum Anlegen einer Vibration mit einem zweiten Vibrationsmuster, das sich von dem ersten Vibrationsmuster unterscheidet, an den Zielabschnitt, durchzuführen,
die Steuervorrichtung (72) dazu eingerichtet ist, die Vibrationsanlegevorrichtung (64, 65) zu veranlassen, den ersten Vibrationsanlegevorgang durchzuführen, wenn der von dem Indexerfassungsteil (41 bis 48, 51 bis 54) erfasste Indexwert eine vorbestimmte erste Bedingung erfüllt, die einer ersten Situation der Baumaschine (10) entspricht, und die Vibrationsanlegevorrichtung (64, 65) zu veranlassen, den zweiten Vibrationsanlegevorgang durchzuführen, wenn der vom Indexerfassungsteil (41 bis 48, 51 bis 54) erfasste Indexwert eine vorbestimmte zweite Bedingung erfüllt, die einer zweiten Situation der Baumaschine (10) entspricht, die sich von der ersten Bedingung unterscheidet, und
der Indexwert einen externen Umgebungsindexwert beinhaltet, der sich entsprechend einer relativen Position zwischen der Baumaschine (10) und wenigstens einem um die Baumaschine (10) vorhandenen Peripherieobjekt ändert,
**dadurch gekennzeichnet, dass**
das wenigstens eine Peripherieobjekt ein Zielobjekt ist, das an einer Zielposition vorhanden ist, die als ein Ziel eingestellt ist, zu dem sich ein spezifischer Abschnitt der Baumaschine (10) bewegt,
der externe Umgebungsindexwert einen Zielabstand von dem spezifischen Abschnitt der Baumaschine (10) zu der Zielposition beinhaltet,
die erste Bedingung eine Bedingung beinhaltet, dass der Zielabstand innerhalb eines vorbestimmten ersten Abstandsbereichs liegt, und
die zweite Bedingung eine Bedingung beinhaltet, dass der Zielabstand innerhalb eines vorbestimmten zweiten Abstandsbereichs liegt, der sich vom ersten Abstandsbereich unterscheidet, wobei der zweite Abstandsbereich näher an der Zielposition liegt als der erste Abstandsbereich, und
der spezifische Abschnitt ein distaler Endabschnitt des Anbaugeräts (25) ist.

2. Baumaschine (10) nach Anspruch 1, wobei der Indexwert einen internen Umgebungsindexwert beinhaltet, der einen internen Zustand der Baumaschine (10) oder eine Stellung der Baumaschine (10), die sich ändert, wenn die Baumaschine (10) in Betrieb ist, angibt.

3. Baumaschine (10) nach Anspruch 2, wobei
der interne Umgebungsindexwert einen Anomaliegrad beinhaltet, der ein Wert ist, der einen Anomaliegrad eines internen Zustands der Baumaschine (10) angibt,
das Indexerfassungsteil (41 bis 48, 51 bis 54) ein Anomaliegradmessteil (45) beinhaltet, das dazu eingerichtet ist, den Anomaliegrad zu messen,
die erste Bedingung eine Bedingung beinhaltet, dass der von dem Anomaliegradmessteil (45) gemessene Anomaliegrad innerhalb eines vorbestimmten ersten Bereichs liegt, und
die zweite Bedingung eine Bedingung beinhaltet, dass der von dem Anomaliegradmessteil (45) gemessene Anomaliegrad innerhalb eines vorbestimmten zweiten Bereichs liegt, der sich von dem ersten Bereich unterscheidet.

4. Baumaschine (10) nach Anspruch 3, wobei in Bezug auf wenigstens das erste Vibrationsmuster oder das zweite Vibrationsmuster eine Vibrationsfrequenz der Vibrationsanlegevorrichtung (64, 65) umso größer wird oder eine Amplitude der Vibration umso größer wird, je größer der Anomaliegrad ist.

5. Baumaschine (10) nach Anspruch 1, wobei
das wenigstens eine Peripherieobjekt ein erstes Peripherieobjekt und ein zweites Peripherieobjekt beinhaltet,
das Indexerfassungsteil (41 bis 48, 51 bis 54) einen ersten Bereichssensor, der dazu eingerichtet ist, das erste Peripherieobjekt zu erfassen, wenn das erste Peripherieobjekt in einem ersten Bereich um die Baumaschine (10) positioniert ist, und einen zweiten Bereichssensor (47), der dazu eingerichtet ist, das zweite Peripherieobjekt zu erfassen, wenn das zweite Peripherieobjekt in einem zweiten Bereich um die Baumaschine (10), der sich vom ersten Bereich unterscheidet, positioniert ist, beinhaltet,
der externe Umgebungsindexwert beinhaltet: einen ersten Bereichsindexwert, der angibt, ob das erste Peripherieobjekt vom ersten Bereichssensor erfasst wird oder nicht; und einen zweiten Bereichsindexwert, der angibt, ob das zweite Peripherieobjekt vom zweiten Bereichssensor (47) erfasst wird oder nicht,
die erste Bedingung eine Bedingung beinhaltet, dass der erste Bereichsindexwert angibt, dass das erste Peripherieobjekt vom ersten Bereichssensor erfasst wird, und
die zweite Bedingung eine Bedingung beinhaltet, dass der zweite Bereichsindexwert angibt, dass das zweite Peripherieobjekt vom zweiten Bereichssensor (47) erfasst wird.

6. Baumaschine (10) nach einem der Ansprüche 2, 3 und 4, ferner umfassend eine Vielzahl von Aktoren (22, 24, 27, 28), die den unteren Fahrkörper (12), den oberen Schwenkkörper (14), die Arbeitsvorrichtung (15) bzw. das Anbaugerät (25) bewegen, wobei
der interne Umgebungsindexwert eine Größe einer Last beinhaltet, die an wenigstens einen Aktor aus der Vielzahl von Aktoren (22, 24, 27, 28) angelegt ist,
das Indexerfassungsteil (41 bis 48, 51 bis 54) einen Lastmessteil (51 bis 54) beinhaltet, das dazu eingerichtet ist, die Größe der Last zu messen,
die erste Bedingung eine Bedingung beinhaltet, dass die Größe der von dem Lastmessteil (51 bis 54) gemessenen Last innerhalb eines vorbestimmten ersten Lastbereichs liegt, und
die zweite Bedingung eine Bedingung beinhaltet, dass die Größe der von dem Lastmessteil (51 bis 54) gemessenen Last innerhalb eines vorbestimmten zweiten Lastbereichs liegt, der sich von dem ersten Lastbereich unterscheidet.

7. Baumaschine (10) nach einem der Ansprüche 1 bis 6, wobei das Betätigungsteil (61) ein Fernsteuerbetätigungsteil ist, das es dem Bediener ermöglicht, eine Fernsteuerung der Baumaschine (10) durchzuführen.

8. Baumaschine (10) nach einem der Ansprüche 2, 3, 4 und 6, wobei
der interne Umgebungsindexwert eine Größe einer Neigung der Baumaschine (10) in Bezug auf eine horizontale Richtung beinhaltet,
das Indexerfassungsteil (41 bis 48, 51 bis 54) einen Neigungssensor (48) beinhaltet, der die Neigung der Baumaschine (10) in Bezug auf die horizontale Richtung erfasst,
die erste Bedingung eine Bedingung beinhaltet, dass die durch den Neigungssensor (48) erfasste Neigung der Baumaschine (10) innerhalb eines vorbestimmten ersten Neigungsbereichs liegt, und
die zweite Bedingung eine Bedingung beinhaltet, dass die durch den Neigungssensor (48) erfasste Neigung der Baumaschine (10) innerhalb eines vorbestimmten zweiten Neigungsbereichs liegt, der sich vom ersten Neigungsbereich unterscheidet.

9. Baumaschine (10) nach einem der Ansprüche 1 bis 8, wobei
das Betätigungsteil (61) einen Betätigungshebel (61) beinhaltet, und
die Vibrationsanlegevorrichtung (64, 65) an dem Betätigungshebel (61) angebracht ist, um den Betätigungshebel (61) vibrieren zu lassen.

10. Baumaschine (10) nach Anspruch 9, wobei die Vibrationsanlegevorrichtung (64, 65) abnehmbar an dem Betätigungshebel (61) angebracht ist.

11. Baumaschine (10) nach einem der Ansprüche 1 bis 10, wobei
der Zielabschnitt eine Armlehne (63) beinhaltet, und
die Vibrationsanlegevorrichtung (64, 65) an der Armlehne (63) angebracht ist, um die Armlehne (63) vibrieren zu lassen.

12. Baumaschine (10) nach einem der Ansprüche 1 bis 11, wobei wenigstens die erste Bedingung, die zweite Bedingung, das erste Vibrationsmuster oder das zweite Vibrationsmusters veränderbar oder einstellbar ist.

## Revendications

1. Machine de construction (10) comprenant :
un corps de déplacement inférieur (12) ;
un corps de pivotement supérieur (14) monté sur le corps de déplacement inférieur (12) de manière à être pivotante ;
un dispositif de travail (15) relié de manière rotative au corps de pivotement supérieur (14) ;
un accessoire (25) reliée à une extrémité distale du dispositif de travail (15) ;
une partie d'opération (61) qui reçoit une opération d'un opérateur pour actionner au moins l'un du corps de déplacement inférieur (12), du corps de pivotement supérieur (14), du dispositif de travail (15) et de l'accessoire (25) ;
un dispositif d'application de vibrations (64, 65) qui applique une vibration à une partie cible qui est au moins une partie d'une partie de la machine de construction (10) qui est mise en contact avec un corps de l'opérateur qui actionne la partie d'opération (61) ;
un dispositif de commande (72) qui commande une opération du dispositif d'application de vibrations (64, 65) ; et
une partie d'acquisition d'indice (41 à 48, 51 à 54) qui acquiert une valeur d'indice indiquant une situation de la machine de construction (10), dans laquelle
le dispositif d'application de vibrations (64, 65) est configuré pour effectuer une première opération d'application de vibrations pour appliquer une vibration ayant un premier modèle de vibration à la partie cible, et une seconde opération d'application de vibrations pour appliquer une vibration ayant un second modèle de vibration différent du premier modèle de vibration à la partie cible,
le dispositif de commande (72) est configuré pour amener le dispositif d'application de vibrations (64, 65) à effectuer la première opération d'application de vibrations lorsque la valeur d'indice acquise par la partie d'acquisition d'indice (41 à 48, 51 à 54) satisfait à une première condition prédéterminée correspondant à une première situation de la machine de construction (10), et pour amener le dispositif d'application de vibrations (64, 65) à effectuer la seconde opération d'application de vibrations lorsque la valeur d'indice acquise par la partie d'acquisition d'indice (41 à 48, 51 à 54) satisfait à une seconde condition prédéterminée correspondant à une seconde situation de la machine de construction (10) qui diffère de la première condition, et
la valeur d'indice comprend une valeur d'indice de l'environnement externe qui change en fonction d'une position relative entre la machine de construction (10) et au moins un objet périphérique existant autour de la machine de construction (10), **caractérisée en ce que**
l'au moins un objet périphérique est un objet cible existant à une position cible définie comme destination vers laquelle se déplace une partie spécifique de la machine de construction (10),
la valeur d'indice de l'environnement externe comprend une distance cible de la partie spécifique de la machine de construction (10) à la position cible,
la première condition comprend une condition selon laquelle la distance cible est dans une première plage de distance prédéterminée, et
la seconde condition comprend une condition selon laquelle la distance cible est dans une seconde plage de distance prédéterminée qui diffère de la première plage de distance, la seconde plage de distance étant une plage plus proche de la position cible que la première plage de distance, et
la partie spécifique est une partie de l'extrémité distale de l'accessoire (25).

2. Machine de construction (10) selon la revendication 1, dans laquelle la valeur d'indice comprend une valeur d'indice d'environnement interne indiquant un état interne de la machine de construction (10) ou une posture de la machine de construction (10) qui change lorsque la machine de construction (10) fonctionne.

3. Machine de construction (10) selon la revendication 2, dans laquelle
la valeur d'indice d'environnement interne comprend un degré d'anomalie qui est une valeur indiquant un degré d'anomalie d'un état interne de la machine de construction (10),
la partie d'acquisition d'indice (41 à 48, 51 à 54) comprend une partie de mesure du degré d'anomalie (45) configurée pour mesurer le degré d'anomalie,
la première condition comprend une condition selon laquelle le degré d'anomalie mesuré par la partie de mesure du degré d'anomalie (45) est dans une première plage prédéterminée, et
la seconde condition comprend une condition selon laquelle le degré d'anomalie mesuré par la partie de mesure du degré d'anomalie (45) est dans une seconde plage prédéterminée qui est différente de la première plage.

4. Machine de construction (10) selon la revendication 3, dans laquelle, par rapport à au moins un du premier modèle de vibration et du second modèle de vibration, plus le degré d'anomalie est élevé, plus une fréquence de vibration par le dispositif d'application de vibrations (64, 65) augmente ou plus l'amplitude de la vibration augmente.

5. Machine de construction (10) selon la revendication 1, dans laquelle
l'au moins un objet périphérique comprend un premier objet périphérique et un second objet périphérique,
la partie d'acquisition d'indice (41 à 48, 51 à 54) comprend un capteur de première zone configuré pour détecter le premier objet périphérique lorsque le premier objet périphérique est positionné dans une première zone autour de la machine de construction (10), et un capteur de seconde zone (47) configuré pour détecter le second objet périphérique lorsque le second objet périphérique est positionné dans une seconde zone autour de la machine de construction (10) qui diffère de la première zone,
la valeur de l'indice de l'environnement externe comprend : une valeur d'indice de première zone indiquant si le premier objet périphérique est détecté ou non par le capteur de première zone ; et une valeur d'indice de seconde zone indiquant si le second objet périphérique est détecté ou non par le capteur de second zone (47),
la première condition comprend une condition selon laquelle la valeur d'indice de première zone indique que le premier objet périphérique est détecté par le capteur de première zone, et
la seconde condition comprend une condition selon laquelle la valeur d'indice de la seconde zone indique que le second objet périphérique est détecté par le capteur de seconde zone (47).

6. Machine de construction (10) selon l'une des revendications 2, 3 et 4, comprenant en outre une pluralité d'actionneurs (22, 24, 27, 28) qui déplacent respectivement le corps de déplacement inférieur (12), le corps de pivotement supérieur (14), le dispositif de travail (15) et l'accessoire (25), dans laquelle
la valeur d'indice d'environnement interne comprend une ampleur d'une charge appliquée à au moins un actionneur parmi la pluralité d'actionneurs (22, 24, 27, 28),
la partie d'acquisition d'indice (41 à 48, 51 à 54) comprend une partie de mesure de la charge (51 à 54) configurée pour mesurer l'ampleur de la charge,
la première condition comprend une condition selon laquelle l'ampleur de la charge mesurée par la partie de mesure de la charge (51 à 54) est dans une première plage de charge prédéterminée, et
la seconde condition comprend une condition selon laquelle l'ampleur de la charge mesurée par la partie de mesure de la charge (51 à 54) est dans une seconde plage de charge prédéterminée qui est différente de la première plage de charge.

7. Machine de construction (10) selon l'une des revendications 1 à 6, dans laquelle la partie d'opération (61) est une partie d'opération à distance qui permet à l'opérateur d'effectuer une commande à distance de la machine de construction (10).

8. Machine de construction (10) selon l'une des revendications 2, 3, 4 et 6, dans laquelle
la valeur d'indice d'environnement interne comprend une ampleur d'une inclinaison de la machine de construction (10) par rapport à une direction horizontale,
la partie d'acquisition d'indice (41 à 48, 51 à 54) comprend un capteur d'inclinaison (48) qui détecte l'inclinaison de la machine de construction (10) par rapport à la direction horizontale,
la première condition comprend une condition selon laquelle l'inclinaison de la machine de construction (10) détectée par le capteur d'inclinaison (48) est dans une première plage d'inclinaison prédéterminée, et
la seconde condition comprend une condition selon laquelle l'inclinaison de la machine de construction (10) détectée par le capteur d'inclinaison (48) est dans une seconde plage d'inclinaison prédéterminée qui est différente de la première plage d'inclinaison.

9. Machine de construction (10) selon l'une des revendications 1 à 8, dans laquelle
la partie d'opération (61) comprend un levier d'opération (61), et
le dispositif d'application de vibrations (64, 65) est monté sur le levier d'opération (61) de manière à faire vibrer le levier d'opération (61).

10. Machine de construction (10) selon la revendication 9, dans laquelle le dispositif d'application de vibrations (64, 65) est monté de manière amovible sur le levier d'opération (61).

11. Machine de construction (10) selon l'une des revendications 1 à 10, dans laquelle
la partie cible comprend un accoudoir (63), et
le dispositif d'application de vibrations (64, 65) est monté sur l'accoudoir (63) de manière à faire vibrer l'accoudoir (63).

12. Machine de construction (10) selon l'une des revendications 1 à 11, dans laquelle au moins l'une de la première condition, de la seconde condition, du premier modèle de vibration et du second modèle de vibration est modifiable ou ajustable.
